Europäisches Patentamt

European Patent Office

Office européen des brevets

(19)

(11) Numéro de publication: **0 267 064 B1**

## (12)  FASCICULE DE BREVET EUROPEEN

(45) Date de publication de fascicule du brevet:
28.08.91

(51) Int. Cl.5: **H02H 7/08, E05B 15/00**

(21) Numéro de dépôt: **87402121.5**

(22) Date de dépôt: **23.09.87**

Le dossier contient des informations techniques présentées postérieurement au dépôt de la demande et ne figurant pas dans le présent fascicule.

(54) **Procédé et dispositif de commande d'un moteur électrique, notamment pour lève-vitre d'automobile.**

(30) Priorité: **30.09.86 FR 8613571**

(43) Date de publication de la demande:
**11.05.88 Bulletin 88/19**

(45) Mention de la délivrance du brevet:
**28.08.91 Bulletin 91/35**

(84) Etats contractants désignés:
**DE ES GB IT SE**

(56) Documents cités:
**DE-A- 3 335 407**
**DE-A- 3 527 104**
**FR-A- 2 294 571**
**GB-A- 2 020 928**

(73) Titulaire: **DAV, Société dite**
**Vétraz-Monthoux B.P. 85**
**F-74101 Annemasse Cédex(FR)**

(72) Inventeur: **Lepine, Gérard**
**7, rue des Alpes**
**F-74100 Ambilly(FR)**
Inventeur: **Saulgeot, Jean-Michel**
**Le Faubourg**
**F-74380 Lucinges(FR)**

(74) Mandataire: **Clisci, Serge et al**
**S.A. FEDIT-LORIOT CONSEILS EN PROPRIETE**
**INDUSTRIELLE 38, avenue Hoche**
**F-75008 Paris(FR)**

## Description

La présente invention concerne un dispositif de commande d'un moteur électrique, notamment pour lève-vitre d'automobile, assurant une coupure automatique de l'alimentation du moteur en cas de blocage de celui-ci.

L'invention vise également un dispositif de commande pour lève-vitre permettant de commander la montée ou la descente complète de la vitre, par une simple impulsion sur une touche de commutateur avec coupure automatique de l'alimentation du moteur en fin de course.

L'invention vise encore un procédé de commande de moteur électrique.

On connaît déjà des commandes permettant la montée et la descente de la vitre -parfois la descente seule- non pas seulement au moyen d'une seule commande électrique avec maintien de touche, mais également au moyen d'une sélection par impulsion sur la touche.

De telles commandes trouvent notamment leur intérêt lors des accès de parkings ou garages ou de péages d'autoroutes.

Les commandes de lève-vitres en général, et celles à commande impulsionnelle en particulier, doivent être munies d'un système de sécurité interrompant automatiquement l'alimentation du moteur en cas de blocage. Un tel blocage peut se produire fortuitement, dans le cas où un obstacle empêche le libre mouvement de la vitre, ou bien normalement, dans le cas de la commande impulsionnelle, à l'arrivée de la vitre en fin de course haute ou basse.

Il est connu de réaliser la coupure de l'alimentation, en cas de blocage du moteur, par un détecteur thermique de surcharge.

Mais un tel détecteur a une réponse relativement lente (par exemple une dizaine de secondes) et nécessite un temps de refroidissement appréciable avant de reprendre sa condition initiale.

Il a été également proposé d'assurer la sécurité au blocage par la mesure du courant passant dans le moteur, ce courant étant notamment détecté au moyen d'un shunt résistif placé en série sur le circuit d'alimentation du moteur.

Le document DE-A-35 27 104 enseigne de provoquer l'arrêt du moteur en cas de blocage en arrêtant la commande sur l'apparition de la pointe de courant dans le moteur provoquée par le blocage de celui-ci. Une telle pointe se produisant également lors du démarrage du moteur, il est nécessaire de discriminer les deux phases. Selon le document cité, on utilise comme niveau de référence pour la discrimination, le niveau de l'appel de courant au démarrage, mais celui-ci n'est pas constant et rend la détection aléatoire. En effet, cet appel de courant fluctue selon les conditions de température, de résistance mécanique (givrage), de tension d'alimentation (tension batterie entre 6 et 16 V), et des caractéristiques différentes des moteurs et de leurs fluctuations. Un tel système est donc insuffisamment sûr.

D'autres moyens connus de détection de blocage consistent à exploiter la présence sur le courant du moteur d'une ondulation alternative à la fréquence de passage des pôles de l'induit devant le collecteur du moteur. Cette ondulation doit être convenablement amplifiée et filtrée, et sa disparition (ou chute de fréquence correspondante) provoque l'arrêt, après un certain temps de réponse, pour s'affranchir des divers ralentissements ou irrégularités susceptibles d'apparaître dans la rotation du moteur. De tels dispositifs nécessitent une électronique compliquée, coûteuse et encombrante. Cet encombrement oblige à loger le dispositif de commande dans un boîtier externe au commutateur manuel de commande, par exemple dans le cadre de portière, ce qui implique l'installation de fils de raccordement.

La présente invention a pour but de remédier aux inconvénients signalés ci-dessus des dispositifs de commande connus et de simplifier de manière importante le système de sécurité é ou blocage ainsi que la commande elle-même qui peut être assurée à la fois par touche impulsionnelle et par touche directe à maintien. Grâce à l'invention on peut :

- diminuer l'encombrement de l'électronique permettant ainsi de loger cette dernière dans le commutateur de commande ;
- améliorer son fonctionnement notamment en matière de temps de réponse, de précision et d'insensibilité aux variations de paramètres en évitant tout réglage ;
- obtenir une diminution sensible de coût ;
- accroître la fiabilité du module électronique grâce à sa simplicité ;
- s'affranchir des filtrages et mises en forme délicats.

L'invention présente un intérêt particulier dans le cas de lève-vitre d'automobiles, mais elle peut s'appliquer à la commande de tout organe mobile actionné par un moteur électrique, par exemple la commande des déplacements d'un toit ouvrant ou de sièges sur une automobile ou la commande de stores dans des habitations.

Le procédé suivant l'invention consiste à détecter et à conserver en mémoire, pour chaque cycle de commande, le niveau du courant de démarrage du moteur et à faire couper l'alimentation du moteur, ou blocage de celui-ci, en réponse à l'apparition d'un appel de courant de niveau sensiblement égal, par comparaison avec le niveau du courant de démarrage qui a été mémorisé.

Ainsi, pour chaque cycle de fonctionnement, un nouveau niveau de détection, servant de valeur de référence, est généré, ce qui évite d'avoir à fixer un niveau de référence unique obligeant à prévoir de larges plages de sécurité de détection et des réglages spécifiques en fonction de chaque cas particulier.

L'invention a pour objet un dispositif de commande d'un moteur électrique, notamment pour lève-vitre d'automobile, qui comprend au moins un commutateur manuel établissant l'alimentation du moteur, et un shunt résistif, placé en série sur le circuit du moteur, fournissant une tension de mesure V représentative du courant passant dans le moteur. Selon l'invention, le dispositif comprend un circuit détecteur bistable comparateur de tension raccordé audit shunt et un circuit inhibiteur qui est déclenché par la sortie dudit circuit détecteur lorsque celui-ci passe de l'état logique 0 à l'état logique 1, pour couper l'alimentation du moteur. Les deux entrées du circuit détecteur sont raccordées par deux circuits ou branches individuelles audit shunt, la première entrée recevant, au démarrage du moteur, et conservant en mémoire un premier signal de tension $V_D$ qui est transmis par le premier circuit individuel et qui est représentatif du courant de démarrage, ledit premier signal constituant un niveau de référence pour chaque cycle de fonctionnement du moteur, tandis que la deuxième entrée du circuit détecteur reçoit, par l'intermédiaire du deuxième circuit individuel, un signal retardé $V_M < V_D$ représentant sensiblement le courant de marche du moteur, puis un signal $V_B > V_M$ en cas de blocage du moteur, ledit circuit détecteur passant de l'état 0 à l'état 1 lorsque $V_B$ sur la deuxième entrée $> V_D$ sur la première entrée et déclenchant ainsi le circuit inhibiteur pour couper l'alimentation du moteur en réponse à son blocage.

Selon l'invention, l'acquisition et la mémorisation du signal $V_D$ sur la première entrée sont réalisées par la charge rapide d'un condensateur puis par sa décharge lente à travers une résistance élevée, ces composants faisant partie du premier circuit individuel et leur valeur étant choisie de façon telle que le niveau du signal $V_D$ soit maintenu sensiblement constant pendant la durée complète d'un cycle de fonctionnement du moteur. D'autre part une diode est interposée sur le premier circuit individuel pour s'opposer à la décharge rapide du condensateur précité.

Le deuxième circuit individuel comporte un condensateur et également une résistance de charge, la constante de temps (R.C.) du deuxième circuit individuel étant beaucoup plus élevée que la constante de temps du premier circuit individuel, grâce à quoi le signal appliqué sur la deuxième entrée est un signal retardé par rapport au signal appliqué sur la première entrée.

Le circuit détecteur bistable utilisé comme organe de détection du blocage du moteur est avantageusement constitué par un amplificateur opérationnel monté en comparateur de tension et dont la sortie est bistable.

L'invention sera mieux comprise à l'aide de la description qui suit et des dessins annexés. Sur ces dessins :

La figure 1 est un schéma simplifié du système de détection de blocage du moteur dans un dispositif suivant l'invention.

La figure 2 est une courbe montrant les variations du courant moteur et l'évolution des signaux au cours d'un cycle de fonctionnement.

La figure 3 montre le circuit à "courants faibles" dans une forme de réalisation du dispositif suivant l'invention, avec commande impulsionnelle.

La figure 4 montre le circuit de puissance dans le même dispositif.

La figure 5 est une vue schématique du commutateur à commande directe et à commande impulsionnelle.

La figure 6 correspond à une partie du schéma de la figure 3 et illustre le fonctionnement de la commande impulsionnelle.

La figure 7 est une vue en coupe, simplifiée, d'un commutateur de commande auquel est incorporé le circuit détecteur du dispositif suivant l'invention.

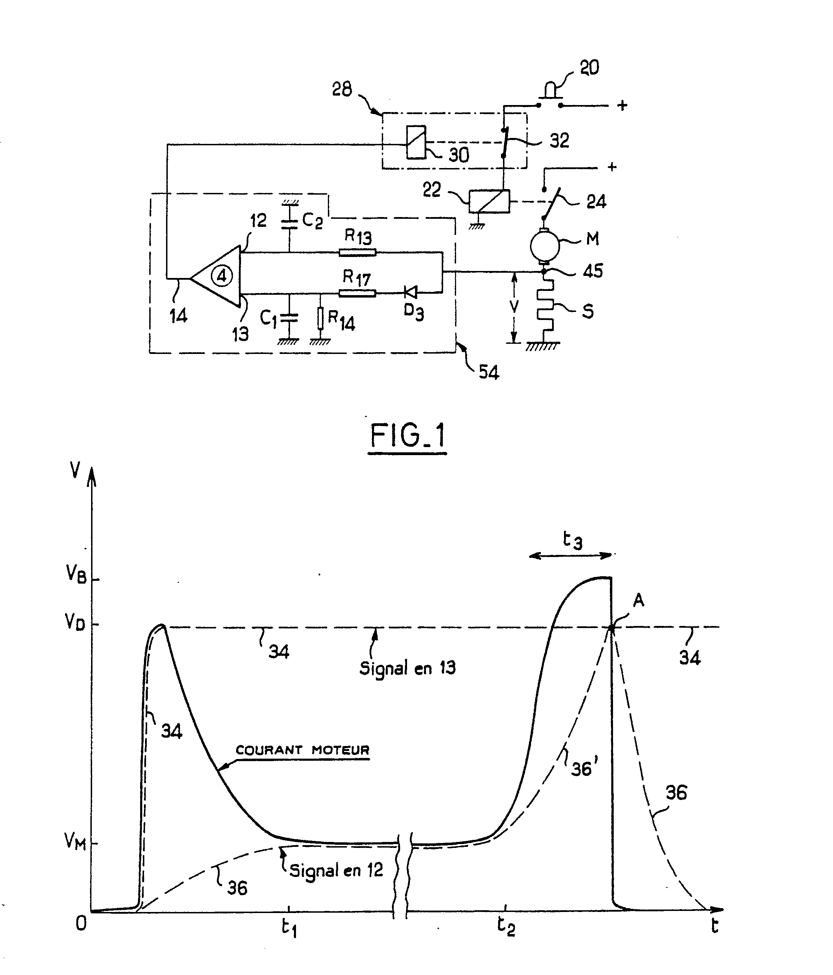

Sur le schéma simplifié de la figure 1, on a représenté un moteur électrique M dont la mise en route est commandée par un commutateur manuel 20. Le commutateur manuel 20 peut commander directement la fermeture du circuit d'alimentation du moteur M, mais, de préférence, comme il est représenté sur la figure 1, le commutateur 20 commande l'excitation d'un relais 22 (électromagnétique ou statique) dont le contact mobile 24 ferme le circuit d'alimentation du moteur M quand la touche du commutateur est enfoncée.

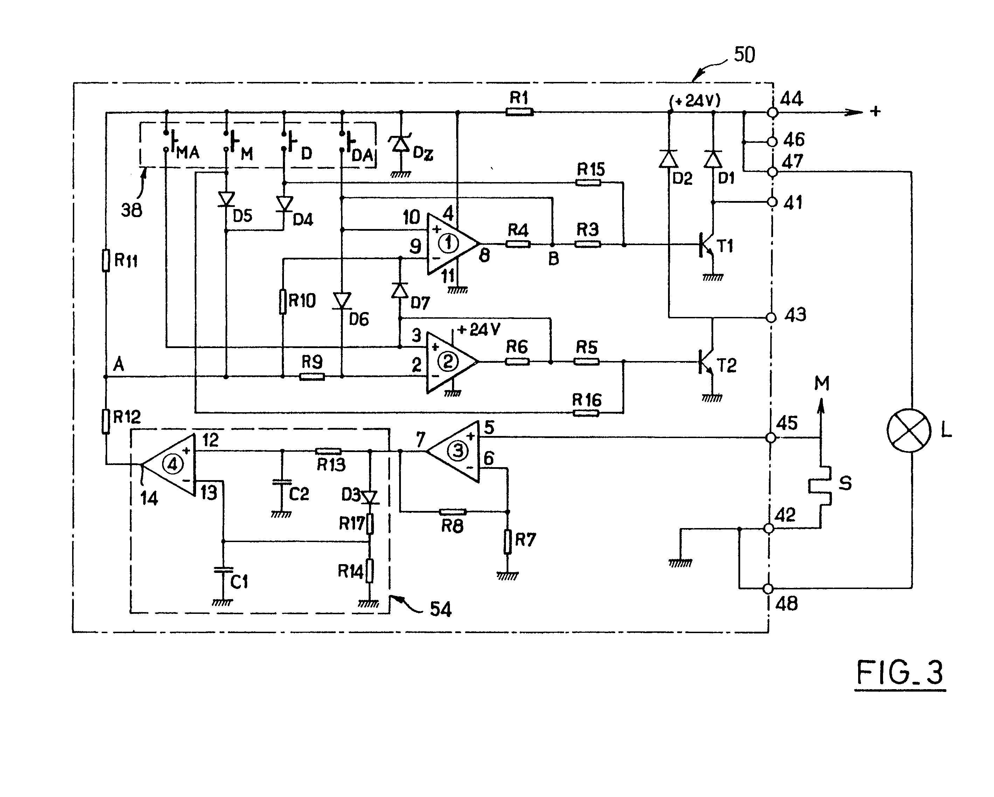

C'est par souci de clarté qu'on a représenté sur la figure 1 un seul commutateur manuel de commande du moteur M, mais, bien entendu, dans la réalité, il existe au moins deux commutateurs 20 (un pour la montée et un pour la descente) et, de préférence, comme on le verra à propos de la figure 3, quatre commutateurs (Montée directe-Descente directe-Montée automatique impulsionnelle-Descente automatique impulsionnelle).

Sur le circuit d'alimentation du moteur M est monté en série un shunt résistif S, de faible valeur résistive, qui donne à ses bornes une tension V représentative du courant passant à travers le moteur.

Le dispositif suivant l'invention comprend un circuit détecteur constitué par un amplificateur opérationnel 4, en montage différentiel, agissant en comparateur de tension à sortie bistable, dont les deux entrées 12, 13 sont raccordées à la borne du shunt S, par deux branches ou circuits individuels.

Ces deux circuits individuels, qui seront décrits plus en détail dans ce qui suit, sont des circuits RC ayant des constantes de temps différentes.

Le dispositif comprend encore un circuit inhibiteur 28, ou circuit de remise à zéro, dont le déclenchement est commandé par la sortie 14 du comparateur 4 lorsque celui-ci change de niveau logique. Ce circuit inhibiteur a été représenté schématiquement sur la figure 1 sous la forme d'un relais 30 qui ouvre, quand il est excité, un interrupteur 32 normalement fermé interposé sur le circuit du commutateur 20. Comme on le verra à propos de la figure 3, ce circuit inhibiteur 28 est de préférence aussi un circuit à composants statiques dans lequel le signal de déclenchement issu de la sortie 14 est appliqué à l'entrée de remise à zéro de bascules électroniques.

Le premier circuit individuel reliant l'entrée 13 du comparateur 4 à la borne 45 du shunt S comprend un condensateur $C_1$, ou condensateur de mémorisation, une résistance de fuite $R_{14}$, une résistance de charge $R_{17}$ et une diode $D_3$.

Le deuxième circuit individuel reliant l'entrée 12 du comparateur 4 à la borne 45 du shunt S comprend un condensateur $C_2$ et une résistance de charge $R_{13}$, telle que la constante de temps de ce deuxième circuit est beaucoup plus forte que celle du premier circuit.

Ces deux circuits forment, avec le comparateur 4, un circuit de détection de blocage 54 dont le fonctionnement va être décrit maintenant.

Dans l'état de repos représenté sur la figure 1 le comparateur 4 se trouve à l'un de ses niveaux logiques, par exemple 0, auquel i l revient, comme on le verra plus loin, après la terminaison d'un cycle de manoeuvre. Dans cet état, la sortie 14 ne transmet pas de signal de déclenchement au circuit inhibiteur 28.

Lorsqu'on actionne le commutateur 20, le moteur démarre et on représente en trait plein sur la figure 2 le signal de tension V représentatif du courant qui traverse le moteur.

Le niveau d'appel de courant de démarrage, qui dépend des conditions d'environnement, de l'état intrinsèque du moteur et de la transmission, et du niveau d'alimentation, monte jusqu'à une valeur $V_D$, puis redescend ensuite à une valeur sensiblement constante de marche $V_M$, plus faible que $V_D$, pendant tout le temps du transfert (montée ou descente) de la vitre, puis remonte à une valeur plus élevée $V_B$ correspondant au courant absorbé par le moteur au blocage.

On a représenté par la courbe en traits interrompus 34 la valeur du signal de tension appliqué sur l'entrée 13 du comparateur 4, par l'intermédiaire du premier circuit individuel décrit précédemment. A travers la faible résistance $R_{17}$, le condensateur $C_1$ se charge très rapidement à la tension $V_D$ correspondant à l'impulsion de démarrage et applique donc cette tension sur l'entrée 13. Ce signal de tension est conservé, ou mémorisé, sur l'entrée 13, grâce à la diode $D_3$ et à la résistance de fuite $R_{14}$, pendant une durée supérieure au cycle de mouvement en montée ou descente de la vitre, du fait de la décharge lente du condensateur $C_1$ pendant une durée $C_1 R_{14}$.

On a représenté, sur la figure 2, par la courbe en traits interrompus 36, la valeur du signal de tension appliqué sur l'entrée 12 du comparateur 4, par l'intermédiaire du deuxième circuit individuel décrit précédemment. Ce signal suit le niveau du courant moteur avec une constante de temps $R_{13} C_2$, c'est-à-dire avec retard par rapport au signal sur l'entrée 13, le signal sur l'entrée 12 prenant la valeur $V_M$ (à partir du temps $t_1$) pendant tout le temps de marche du moteur pour le transfert de la vitre. Depuis le démarrage, et pendant tout ce temps de transfert, on voit que $V_D$ sur l'entrée 13 est plus grand que $V_M$ sur l'entrée 12, cette différence sur les tensions d'entrée maintenant le comparateur à son état initial de sortie 0, puisque le comparateur compare en permanence le niveau $V_{12}$ à celui mémorisé par la branche $C_1$, $R_{17}$, $R_{14}$.

Lors d'un effort provoqué par un blocage ou lors d'une arrivée en fin de course (temps $t_2$), l'appel de courant, représenté par $V_B$, atteint ou dépasse celui du démarrage, représenté par $V_D$. Ceci a pour effet de faire croître le signal appliqué sur l'entrée 12 (partie 36' de la courbe 36) jusqu'à ce que ce signal soit sensiblement égal (point A) à celui appliqué sur l'entrée 13, ce qui provoque le changement de niveau logique du comparateur 4. Le niveau logique 1 sur la sortie 14 du comparateur 4 commande le déclenchement du circuit inhibiteur 28 qui coupe l'alimentation du moteur M (directement ou sur le circuit d'excitation du relais 22 ou sur la logique bistable de commande de circuit d'excitation). Le temps de réponse $t_3$, pour couper l'alimentation du moteur sur blocage, peut être de quelques 1/10ème de seconde, par exemple 3/10ème de seconde.

On voit, d'après ce qui précède, qu'à chaque cycle de fonctionnement du moteur, un nouveau seuil de référence $V_D$ est automatiquement choisi et mémorisé, en fonction du courant de démarrage, ce qui évite tout réglage initial et rend le dispositif insensible à des variations fortuites des paramètres.

Après la coupure du moteur, le condensateur $C_2$ se décharge très rapidement (à travers $R_{13}$ et S dans le cas simplifié de la figure 1, mais à travers $R_{13}$ et le circuit amplificateur 3 dans le montage de la figure 3 avec amplificateur), tandis que le condensateur $C_1$ se décharge plus lentement à travers la forte résistance de fuite $R_{14}$, c'est-à-dire qu'on a $V_{12} < V_{13}$ et que le comparateur 4 revient à son niveau logique initial 0, ce qui fait que le circuit inhibiteur n'est plus excité.

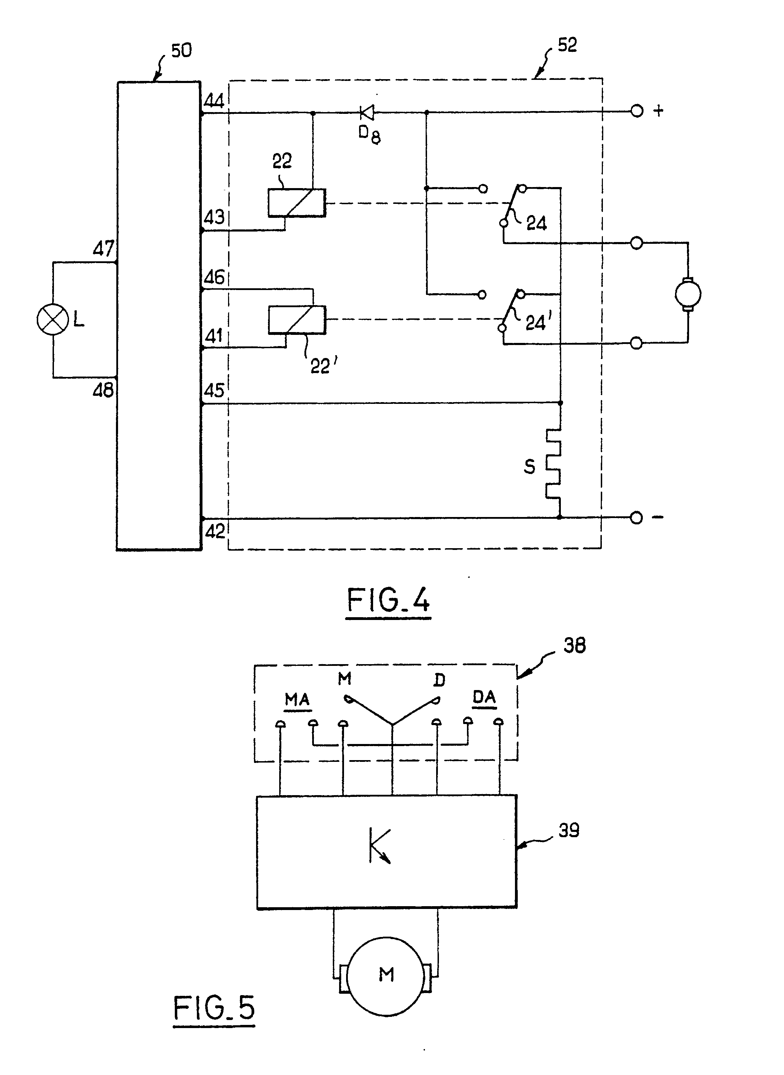

On a représenté sur les figures 3 et 4 un dispositif de commande suivant l'invention permettant la montée et la descente directes de la vitre, par maintien de touches (commutateurs M et D figure 3, analogues comme fonction au commutateur 20 de la figure 1) et, également, la montée et la descente automatiques (commutateurs MA et DA sur la fig3) par impulsion sur une touche, produisant la montée ou la descente complète de la vitre.

Ces diverses fonctions sont groupées sur un seul commutateur 38 qui est raccordé au dispositif de commande 39 suivant l'invention contrôlant l'alimentation du moteur M, ainsi qu'il est schématiquement représenté sur la figure 5.

La figure 3 représente le circuit à courant faible 50 du dispositif et la figure 4 représente le circuit de puissance 52, les liaisons entre les deux circuits étant faites par les bornes 41, 42, 43, 44, 45, 46 comme représenté sur la figure 4. Pour rendre la description plus claire, on a cependant fait figurer sur la figure 3 le shunt résistif S (dont il a été question à propos de la figure 1) qui fait partie du circuit de puissance.

Sur la figure 3, le circuit 54 de détection de blocage du moteur et de commande du circuit inhibiteur est identique au circuit 54 décrit à propos de la figure 1, sauf qu'il n'est pas raccordé directement à la borne 45 du shunt résistif S mais par l'intermédiaire d'un amplificateur 3 effectuant une amplification du signal dans le rapport $1 + R_8/R_7$. D'autre part, la sortie 14 du comparateur 4 ne commande pas un circuit inhibiteur tel que celui schématiquement représenté sur la figure 1 mais un circuit de remise à zéro à composants statiques qui sera décrit dans ce qui suit.

La partie du circuit 50 représentée dans la portion supérieure de la figure 3 constitue une logique de commande bistable qui est adaptée à la commande directe et à la commande automatique (ou impulsionnelle) et qui comprend essentiellement deux cellules d'amplificateurs opérationnels 1 et 2 en montage comparateur agissant en tant que bascules de type "RS".

Bien entendu, tout autre type de bascule, par exemple des bascules de type "D", pourrait également être utilisées pour mémoriser les états de commande.

L'appui maintenu sur le contact D (Descente directe) permet de polariser à travers une résistance $R_{15}$ la base d'un transistor $T_1$ qui, devenant passant, alimente la borne 41 et le relais 22′ (figure 4) de mise en route du moteur dans le sens de la descente. Il en est de même pour le contact M (Montée directe) commandant un transistor $T_2$ à

travers une résistance $R_{16}$, puis le relais 22.

La commande directe est ainsi rendue prioritaire sur toute autre commande, en mode automatique, arrivant sur la base de ces mêmes transistors.

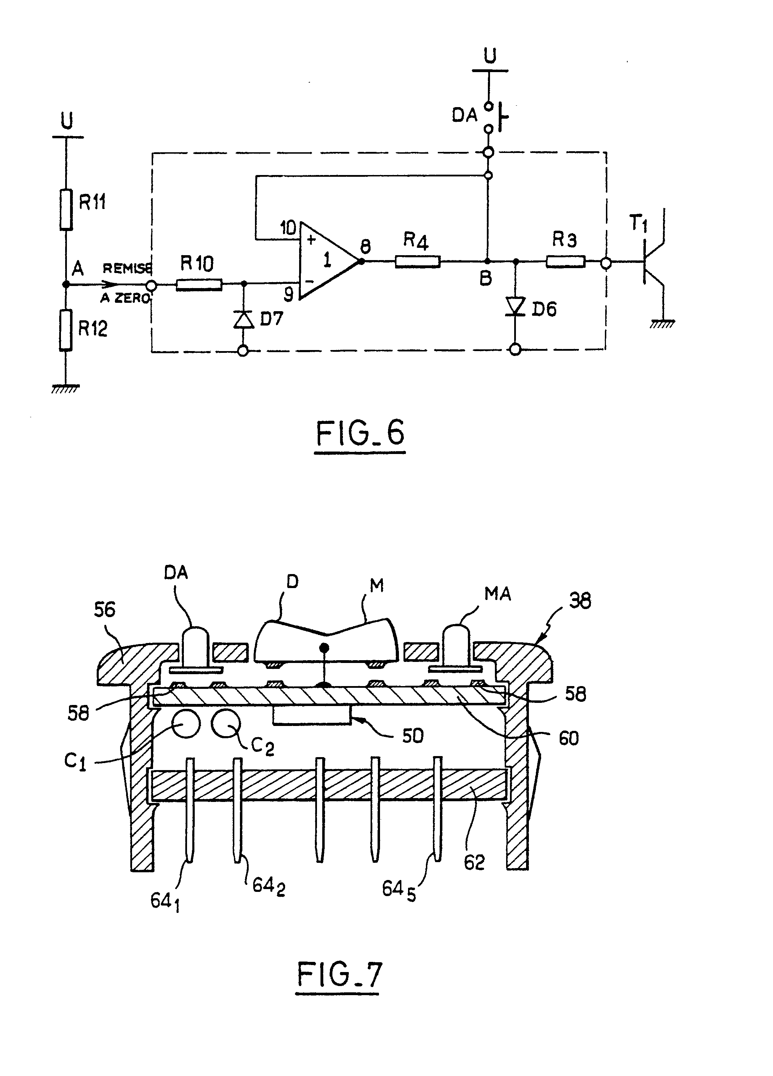

On va décrire maintenant le fonctionnement en mode automatique en se référant à la figure 6 qui montre seulement, par mesure de simplification, les composants entrant en jeu à l'actionnement du contact DA (Descente automatique).

Un appui fugitif sur le contact DA provoque, le temps de son maintien, la polarisation du transistor $T_1$ à travers la résistance $R_3$.

D'autre part, cet appui fugitif a pour effet de porter au + l'entrée + (10) de l'amplificateur ① fonctionnant en bascule "RS", permettant de porter sa sortie 8 au niveau logique 1 et ainsi de maintenir $T_1$ polarisé.

Le même raisonnement vaut pour MA avec $T_2$, $R_5$ et l'amplificateur ②.

L'entrée + de l'amplificateur est à la tension 0 lors de la mise sous tension sans appui de touche. L'entrée - est à la tension VA, par exemple 1/4 de la tension d'alimentation, VA étant fixée par le pont diviseur $R_{11}$, $R_{12}$ qui encadre le point A (figures 3 et 6).

L'appui sur une touche DA ou MA a pour effet de porter l'entrée + de l'amplificateur à la tension U, d'où inversion de niveau logique en sortie de l'amplificateur monté en comparateur de tension.

Lors du relâchement de touche DA, le pont $R_4$-$R_3$ établissant la tension VB à l'entrée + de l'amplificateur ① permet de maintenir la sortie de ① au niveau 1 puisque V + reste supérieur à V-. Ainsi la condition $VA < VB \leq U$ doit être respectée par le choix de valeur de $R_{11}$, $R_{12}$, $R_4$, $R_3$.

Le même raisonnement vaut pour l'actionnement de MA avec l'amplification 2 et le pont $R_6$-$R_5$.

D'autre part, les diodes $D_6$ et $D_7$ permettent de réinitialiser chaque bascule lorsque l'autre se trouve enclenchée, en portant un niveau V- supérieur à celui de V +.

Dans le mode de réalisation représenté sur les figures 3 et 6, la fonction du circuit inhibiteur 28 décrit à propos de la figure 1 est assurée par une remise à zéro simultanée des deux bascules 1 et 2, c'est-à-dire par l'envoi sur les entrées - des bascules d'une tension supérieure à celle de leurs entrées +.

Cette remise à zéro peut être provoquée par l'actionnement d'une touche de commande directe M ou D qui applique la tension aux entrées - par l'intermédiaire des diodes anti-retour $D_4$, $D_5$ et des résistances $R_9$, $R_{10}$ de valeur élevée par rapport à la résistance $R_{12}$ du pont diviseur $R_{11}$, $R_{12}$.

Mais la remise à zéro des deux bascules 1 et 2 (qui entraîne la coupure de l'alimentation du moteur M) est provoquée également par le déclenchement du circuit détecteur de blocage 54 qui fournit alors, sur la sortie 14 du comparateur 4, un signal de tension qui est transmis aux entrées - des bascules 1 et 2 à travers $R_9$ et $R_{10}$.

On a représenté sur la figure 4 le circuit de puissance 52 qui comprend deux relais inverseurs 22, 24 et 22', 24' capables de commuter le courant du moteur M, les bobines 22, 22' de ces relais étant alimentées lorsque les transistors $T_2$, $T_1$ sont passants. Bien entendu, les relais électromagnétiques classiques représentés peuvent être remplacés par des relais statiques ou des transistors de puissance.

Les contacts des relais sont reliés respectivement au + et au - pour permettre de sélectionner l'un ou l'autre sens de rotation du moteur (Montée ou Descente) par l'actionnement de l'un ou l'autre des relais. Des diodes $D_1$ $D_2$ sur le circuit à courant faible 50 (figure 3) protègent les transistors contre les effets de self.

Pour l'alimentation des circuits électroniques, la régulation de tension est assurée par une résistance $R_1$ et une diode Zener DZ (figure 3), une protection contre les inversions de polarité et surtensions inverses étant assurée par une diode $D_8$ - (figure 4).

Enfin une lampe L d'éclairage de l'interrupteur 38 peut être prévue entre les bornes 47, 48 du circuit 50 (figure 3).

Dans un dispositif suivant l'invention, les bascules du circuit logique de commande peuvent être réalisées avec des amplificateurs 1, 2 qui sont de même nature que les amplificateurs 3, 4 utilisés pour le circuit de détection de blocage 54, ces amplificateurs étant issus d'un même circuit intégré standard.

Grâce à cela, ainsi qu'au petit nombre de composants, le circuit logique 50 du dispositif peut tenir sur une carte à circuit imprimé de très faibles dimensions (par exemple environ 35 x 17 x 5 mm), ce qui permet d'associer ou d'accoupler cette carte au commutateur de commande 38 lui-même dont elle ne dépasse pas les dimensions. La carte peut par exemple être logée à l'intérieur du commutateur lui-même ou constituer le fond ou une cloison intermédiaire du commutateur. On réalise ainsi un commutateur multifonction avec circuit électronique logique intégré, ce qui supprime des connexions de raccordement et rend donc l'ensemble plus fiable et d'un montage plus économique.

Suivant encore une variante, dans laquelle la carte à circuit imprimé est logée à l'intérieur du commutateur, en-dessous des touches, tous les composants électroniques du circuit logique peuvent être montés sur la face inférieure de la carte tandis que la face supérieure de la carte constitue le support des zones de contact du commutateur de commande, comme il est représenté schématiquement sur la figure 7 à une échelle considérablement agrandie.

On a seulement fait figurer le boîtier 56 du commutateur 38 sur la face supérieure duquel font saillie les touches D/M et DA-MA dont il a été question à propos des figures 3 et 5.

Les contacts fixes 58 associés à ces touches sont supportés, sur sa face supérieure, par la carte à circuit imprimé 60. Sur la face inférieure de cette carte est monté le circuit électronique 50 dont on a fait figurer seulement les deux condensateurs $C_1$, $C_2$, et le circuit intégré contenant ces amplificateurs. La carte 60 constitue, dans le boîtier 38, une cloison intermédiaire et elle est maintenue dans le boîtier par tout moyen approprié. Comme on l'a vu, les dimensions de la carte 60 n'excèdent pas celles du commutateur. Dans le boîtier 38 est également fixé un fond 62 qui supporte les broches enfichables de raccordement $64_1$, $64_2$ ... $64_5$ qui sont reliées, par des liaisons non représentées, aux sorties 41, 42 ... 48 du circuit 50 (figure 3).

On a représenté sur la figure 7 les contacts fixes 58 du commutateur comme étant des contacts à grains, mais on utilise de préférence des pistes de contact plates, imprimées sur la face supérieure de la carte 60, qui coopèrent avec des pastilles conductrices mobiles portées par des membranes cloquantes.

Suivant encore une variante, la carte à circuit imprimé 60 portant le circuit logique 50 peut être, grâce à ses faibles dimensions, incorporée à l'actionneur (moto-réducteur) du lève-vitre ou organe analogue à commander.

Bien entendu la réalisation du circuit de détection et des mémorisations bistables suivant le principe de l'invention pourra également s'effectuer au moyen d'un circuit intégré spécifique ou bien par traitement numérique à partir d'un microprocesseur, les niveaux de tension aux entrées du comparateur bistable 4 devenant dans ce cas des états logiques d'entrée.

## Revendications

1. Dispositif de commande d'un moteur électrique, notamment pour lève-vitre d'automobile, qui comprend : au moins un commutateur manuel (20, 38) établissant l'alimentation du moteur (M); un shunt résistif (S), placé en série sur le circuit du moteur, fournissant une tension de mesure (V) représentative du courant passant dans le moteur; un circuit détecteur bistable comparateur de tension à deux entrées (13,12) raccordé audit shunt (S), la première entrée (13) recevant un premier signal de référence et la seconde entrée (12) recevant un second signal image du courant moteur de manière que lors d'un blocage du moteur, le second signal devienne supérieur au premier signal et provoque le basculement du circuit détecteur; et un circuit inhibiteur (28) qui est déclenché par la sortie (14) dudit circuit détecteur (4), lorsque celui-ci bascule pour couper l'alimentation du moteur (M) moyennant quoi le blocage du moteur provoque le basculement du circuit détecteur, ce qui déclenche le circuit inhibiteur et coupe l'alimentation du moteur (M), ledit dispositif étant caractérisé en ce que les deux entrées (13, 12) du circuit détecteur (4) sont raccordées par deux circuits ou branches individuelles audit shunt, la première entrée (13) recevant au démarrage du moteur, et conservant en mémoire sur ladite entrée, un premier signal de tension $V_D$ qui est transmis par le premier circuit individuel ($C_1$, $R_{14}$, $R_{17}$, $D_3$) et qui est représentatif du courant de démarrage, ledit premier signal constituant ledit premier signal de référence, qui s'établit à chaque cycle de fonctionnement du moteur, et qui reste appliqué à ladite entrée (13) pendant tout le cycle, tandis que la deuxième entrée (12) du circuit détecteur (4) reçoit, par l'intermédiaire du deuxième circuit individuel ($C_2$, $R_{13}$), le second signal constitué par un signal retardé $V_M < V_D$ représentant sensiblement le courant de marche du moteur, puis un signal $V_B > V_M$ en cas de blocage du moteur, ledit circuit détecteur (4) basculant lorsque $V_B$ sur l'entrée (12) > $V_D$ sur l'entrée 13.

2. Dispositif suivant la revendication 1, caractérisé en ce que l'acquisition et la mémorisation du signal $V_D$ sur la première entrée (13) sont réalisées par la charge rapide d'un condensateur ($C_1$) puis par sa décharge lente à travers une résistance élevée ($R_{14}$), ces composants faisant partie du premier circuit individuel et leur valeur étant choisie de façon telle que le niveau du signal ($V_D$) soit maintenu sensiblement constant pendant la durée complète d'un cycle de fonctionnement du moteur; et en ce qu'un circuit ou composant unique telle qu'une diode ($D_3$) est interposée sur le premier circuit individuel pour s'opposer à la décharge rapide du condensateur ($C_1$).

3. Dispositif suivant la revendication 2, caractérisé en ce que le deuxième circuit individuel comporte un condensateur ($C_2$) et en ce que le premier et le deuxième circuits individuels comprennent chacun une résistance de charge ($R_{17}$, $R_{13}$), la constante de temps ($R_{13}$-$C_2$) du deuxième circuit individuel étant beaucoup plus élevée que la constante de temps ($R_{17}$-$C_1$) du premier circuit individuel, grâce à quoi le signal appliqué sur la deuxième entrée (12) est un signal retardé par rapport au signal appliqué sur la première entrée (13).

4. Dispositif suivant l'une des revendications 1 à 3, caractérisé en ce que le circuit détecteur bistable est constitué par un amplificateur opérationnel (4) agissant en tant que comparateur de tension.

5. Dispositif suivant l'une des revendications 1 à 4, caractérisé en ce que le raccordement du premier et du deuxième circuits individuels à la borne (45) du shunt résistif (S) est fait par l'intermédiaire d'un amplificateur (3).

6. Dispositif suivant l'une des revendications 1 à 5, caractérisé en ce que le circuit inhibiteur (28) comprend un relais (30, 32) ou une bascule électronique (1, 2) qui, en réponse au signal de déclenchement au blocage issu de la sortie (14) du circuit comparateur (4) interrompt le circuit établi par le commutateur manuel (20, 38).

7. Dispositif suivant l'une des revendications précédentes, caractérisé en ce que le commutateur manuel (38) comprend quatre touches (M, D, MA, DA) correspondant à la commande directe et à la commande impulsionnelle automatique; en ce que les ordres fugitifs provenant des commandes impulsionnelles DA, MA sont maintenus établis respectivement par deux circuits logiques de commande impulsionnelle ($R_3$, $T_1$, 1 et $R_5$, $T_2$, 2) comprenant chacun un amplificateur opérationnel (1, 2) fonctionnant en bascule "RS"; et en ce que le signal de déclenchement au blocage issu de la sortie (14) du circuit comparateur (4) est appliqué aux entrées de remise à zéro desdites bascules (1, 2).

8. Dispositif suivant les revendications 4, 5 et 7, caractérisé en ce que les deux circuits logiques de commande impulsionnelle sont constitués par des amplificateurs opérationnels (1,2) de même nature que les amplificateurs (3,4) du circuit de détection de blocage du moteur.

9. Dispositif suivant l'une des revendications 1 à 8, caractérisé en ce que le circuit électronique (50) de commande impulsionnelle et de détection de blocage est logé à l'intérieur du boîtier (56) du commutateur manuel (38).

10. Dispositif suivant la revendication 9, caractérisé en ce que les composants du circuit électronique (50) sont montés sur une face d'une carte (60) à circuit imprimé; en ce que les contacts fixes (58) des commuta-teurs individuels (D, M, DA, MA) sont portés par la face opposée de ladite carte (60); et en ce que ladite carte forme une cloison intermédiaire fixée à l'intérieur du boîtier (38).

11. Dispositif suivant l'une des revendications 1 à 9, caractérisé en ce qu'il est incorporé au moteur (M).

12. Dispositif suivant l'une des revendications 1 à 9, caractérisé en ce que les circuits de détection, d'inhibition et de commande bistable sont réalisés tout ou partie au moyen d'un circuit intégré spécifique ou à partir d'un microprocesseur.

13. Procédé de commande d'un moteur électrique, notamment pour lève-vitre d'automobile, du type qui consiste à faire couper l'alimentation du moteur, au blocage de celui-ci, sur l'apparition d'un appel de courant de niveau sensiblement égal au niveau de démarrage détectée par comparaison d'un signal image du courant moteur et d'un signal de référence, caractérisé en ce que le niveau de courant de démarrage du moteur est mémorisé pour chaque cycle de manoeuvre et utilisé comme référence.

14. Procédé suivant la revendication 13, caractérisé en ce que l'acquisition et la mémorisation du niveau de démarrage sont effectuées au moyen d'une charge capacitive rapide ($C_1$, $R_{17}$) et d'une décharge lente ($R_{14}$, $D_3$) conservant sensiblement le niveau acquis pendant toute la durée d'un cycle de fonctionnement.

**Claims**

1. Device for controlling an electric motor, notably for a car window winder, which comprises: at least one manual switch (20, 38) establishing the power supply to the motor (M); a shunt resistor (S), placed in series with the motor circuit, supplying a measuring voltage (V) representing the current passing in the motor; a bistable detector circuit comparing the voltage at two inputs (13, 12), connected to the said shunt (S), the first input (13) receiving a first reference signal and the second input (12) receiving a second signal which is an analogue of the motor current so that, when the motor stalls, the second signal becomes greater than the first signal and causes the switching over of the detector circuit; and an inhibitor circuit (28) which is triggered by the output (I4) of the said detector circuit (4), when the latter switches over to cut off the power supply to the motor (M), as a result of which the stalling of the motor causes the switching over of the detector circuit, which triggers the inhibitor circuit and cuts off the power supply to the motor (M), the said device being characterised in that the two inputs (13, 12) of the detector circuit (4) are connected by two individual circuits or branches to the said shunt, the first input (13) receiving at the start-up of the motor, and holding in memory at the said input, a first voltage signal $V_D$ which is transmitted by the first individual circuit ($C_1$, $R_{14}$, $R_{17}$, $D_3$) and which represents the starting current, the said first signal constituting the said first reference signal, which is established at each operating cycle of the motor, and which remains applied to the said input (13) throughout the cycle, whilst the second input (12) of the detector circuit (4) receives, through the second individual circuit ($C_2$, $R_{13}$), the second signal consisting of a delayed signal $V_M < V_D$ representing substantially the operating current of the motor, and then a signal $V_B > V_M$ in the event of stalling of the motor, the said detector circuit (4) switching over when $V_B$ at the input (12) > $V_D$ at the input (13).

2. Device according to claim 1, characterised in that the acquisition and storing of the signal $V_D$ at the first input (13) are achieved by the rapid charging of a capacitor ($C_1$) and then its slow discharge through a high resistance ($R_{14}$), these components forming part of the first individual circuit and their value being chosen so that the level of the signal ($V_D$) is maintained substantially constant through the entire duration of an operating cycle of the motor; and in that a circuit or single component, such as a diode ($D_3$), is interposed in the first individual circuit in order to resist the rapid discharge of the capacitor ($C_1$).

3. Device according to claim 2, characterised in that the second individual circuit incorporates a capacitor ($C_2$) and in that the first and second individual circuits each comprise a load resistor ($R_{17}$, $R_{13}$), the time constant ($R_{13}$-$C_2$) of the second individual circuit being much greater than the time constant ($R_{17}$-$c_1$) of the first individual circuit, as a result of which the signal applied to the second input (12) is a signal which is delayed with respect to the signal applied to the first input (13).

4. Device according to one of claims 1 to 3, characterised in that the bistable detector circuit is formed by an operational amplifier (4) acting as a voltage comparator.

5. Device according to one of claims 1 to 4, characterised in that the first and second individual circuits are connected to the terminal (45) of the shunt resistor (S) through an amplifier (3).

6. Device according to one of claims 1 to 5, characterised in that the inhibitor circuit (28) comprises a relay (30, 32) or an electronic flip-flop (1, 2) which, in response to the stall trigger signal originating from the output (14) of the comparison circuit (4) interrupts the circuit established by the manual switch (20, 38).

7. Device according to one of the preceding claims, characterised in that the manual switch (38) comprises four buttons (M, D, MA, DA) corresponding to direct control and automatic pulse control; in that the transitory signals originating from the pulse commands DA, MA are kept established respectively by two pulse control logic circuits ($R_3$, $T_1$, 1 and $R_5$, $T_2$, 2) each comprising an operational amplifier (1, 2) functioning as an RS flip-flop; and in that the stall trigger signal originating from the output (14) of the comparison circuit (4) is applied to the inputs for resetting the said flip-flops (1, 2) to zero.

8. Device according to claims 4, 5 and 7, characterised in that the two pulse control logic circuits are formed by operational amplifiers (1, 2) of the same type as the amplifiers (3, 4) in the circuit for detecting the stalling of the motor.

9. Device according to one of claims 1 to 8, characterised in that the pulse control and stall detection electronic circuit (50) is housed inside the casing (56) of the manual switch (38).

10. Device according to claim 9, characterised in that the components of the electronic circuit (50) are mounted on one face of a printed circuit board (60); in that the fixed contacts (58) of the individual switches (D, M, DA, MA) are carried by the opposite face of the said board (60); and in that the said board forms an intermediate partition fixed inside the casing (38).

11. Device according to one of claims 1 to 9, characterised in that it is incorporated in the motor (M).

12. Device according to one of claims 1 to 9, characterised in that the detector, inhibitor and bistable control circuits are produced entirely or in part by means of a dedicated integrated circuit or from a microprocessor.

13. Method for controlling an electric motor, notably for a car window winder, of the type which consists of causing the power supply to the motor to be cut off, when the latter stalls, on the appearance of a surge of a level substantially equal to the starting level detected by comparing a signal which is an analogue of the motor current and a reference signal, characterised in that the motor starting current level is stored for each operating cycle and used as a reference.

14. Method according to claim 13, characterised in that the acquisition and storing of the starting level are carried out by means of a rapid capacitive charge ($C_1$, $R_{17}$) and a slow discharge ($R_{14}$, $D_3$) preserving substantially the level acquired throughout the duration of an operating cycle.

**Patentansprüche**

1. Vorrichtung zum Steuern eines Elektromotors, insbesondere für einen Fahrzeug-Fensterheber, welche aufweist: wenigstens einen Handschalter (20, 38), welcher die Versorgung des Motors (M) herstellt; einen parallel geschalteten Widerstand (S), der in Reihe zur Motorschaltung geschaltet ist, und eine Meßspannung (V) liefert, die den durch den Motor gehenden Strom wiedergibt; eine Detektorschaltung mit einem bistabilen Spannungskomparator mit zwei Eingängen (13, 12), die mit der Parallelschaltung (S) verbunden ist, wobei der erste Eingang (13) ein erstes Bezugssignal und der zweite Eingang (12) ein zweites Signal erhält, das den Motorstrom beim Motorstillstand wiedergibt, wobei das zweite Signal größer als das erste Signal wird und eine Umschaltung der Detektorschaltung bewirkt; und eine Verzögerungsschaltung (28), die über den Ausgang (14) der Detektorschaltung (4) ausgelöst wird, wenn diese zur Versorgungsunterbrechung des Motors (M) umschaltet, wodurch die Motorblockierung die Umschaltung der Detektorschaltung bewirkt, die Verzögerungsschaltung ausgelöst und die Versorgung des Motors (M) unterbrochen wird, wobei sich die Vorrichtung dadurch auszeichnet, daß die beiden Eingänge (13, 12) der Detektorschaltung (4) über zwei Schaltungen oder einzelne Zweige der Parallelschaltung verbunden sind, der erste Eingang (13) beim Starten des Motors erhalten wird und an diesem Eingang ein erstes Spannungssignal $V_D$ gespeichert wird, das durch die erste Einzelschaltung ($C_1$, $R_{14}$, $R_{17}$, $D_3$) übertragen wird, und die den Startstrom darstellt, daß dieses erste Signal das erste Bezugssignal bildet, das man bei jedem Funktionszyklus des Motors erhält, und das an diesem Eingang (13) während des gesamten Zyklus angelegt bleibt, während der zweite Eingang (12) der Detektorschaltung (4) unter Zwischenschaltung einer zweiten Einzelschaltung ($C_2$, $R_{13}$) das zweite Signal erhält, das von einem verzögerten Signal $V_M < V_D$ gebildet wird, welches im wesentlichen den Arbeitsstrom des Motors darstellt, und dann ein Signal $V_B > V_M$ beim Stillstand des Motors erhält, wobei die Detektorschaltung (4) umschaltet, wenn $V_B$ am Eingang (12) > $V_D$ am Eingang (13) ist.

2. Vorrichtung nach Anspruch 1, dadurch **gekennzeichnet,** daß das Erfassen und das Speichern des Signals $V_D$ am ersten Eingang (13) durch eine schnelle Aufladung eines Kondensators ($C_1$) und dann durch seine langsame Entladung über einen erhöhten Widerstand ($R_{14}$) erfolgen, daß diese Bauteile Teile der ersten Einzelschaltung sind und ihre Werte derart gewählt sind, daß der Pegel des Signals $V_D$ während der vollständigen Funktionszyklusdauer des Motors im wesentlichen konstant bleibt, und daß eine Schaltung oder ein einzelnes Bauteil, wie eine Diode ($D_3$) an der ersten Einzelschaltung vorgesehen ist, um einer schnellen Entladung des Kondensators ($C_1$) entgegenzuwirken.

3. Vorrichtung nach Anspruch 2, dadurch **gekennzeichnet,** daß die zweite Einzelschaltung einen Kondensator ($C_2$) aufweist, daß die erste und die zweite Einzelschaltung jeweils einen Ladewiderstand ($R_{17}$, $R_{13}$) aufweisen, und daß die Zeitkonstante ($R_{13}$ - $C_2$) der zweiten Einzelschaltung wesentlich größer als die Zeitkonstante ($R_{17}$ - $C_1$) der ersten Einzelschaltung dadurch ist, daß das am zweiten Eingang (12) anliegende Signal ein bezüglich des am ersten Eingang (13) anliegenden Signals verzögertes Signal ist.

4. Vorrichtung nach einem der Ansprüche 1 bis 3, dadurch **gekennzeichnet,** daß die bistabile Detektorschaltung von einem Operationsverstärker (4) gebildet wird, welcher als Spannungsvergleicher wirkt.

5. Vorrichtung nach einem der Ansprüche 1 bis 4, dadurch **gekennzeichnet,** daß die Verbindung der ersten und der zweiten Einzelschaltungen mit der Klemme des Parallelwiderstandes (S) mittels eines Verstärkers (3) hergestellt wird.

6. Vorrichtung nach einem der Ansprüche 1 bis 5, dadurch **gekennzeichnet,** daß die Verzögerungsschaltung (28) ein Relais (30, 32) oder einen elektronischen Schalter (1, 2) aufweist, das bzw. der in Abhängigkeit von einem Auslösesignal für das Blockieren, ausgegeben am Ausgang (14) der Komparatorschaltung (4), die durch den Handschalter (20, 38) hergestellte Schaltung unterbricht.

7. Vorrichtung nach einem der vorangehenden Ansprüche, dadurch **gekennzeichnet,** daß der Handschalter (38) vier Tasten (M, D, MA, DA) entsprechend einer direkten Steuerung und einer automatischen Impulssteuerung aufweist, daß die kurzzeitigen Folgen der Impulsbefehle (DA, MA) jeweils durch zwei logische Schaltungen für Impulsbefehle ($R_3$, $T_1$, 1 und $R_5$, $T_2$, 2) bereitgestellt werden, welche jeweils einen Operationsverstärker (1, 2), welcher als Schalter "RS" wirkt, aufweisen, und daß das Auslösesignal beim Blockieren, das über den Ausgang (14) der Komperatorschaltung (4) ausgegeben wird, an den Nullrücksetzeingängen der Schalter (1, 2) anliegt.

8. Vorrichtung nach Anspruch 4, 5 und 7, dadurch **gekennzeichnet,** daß die beiden logischen Schaltungen für den Impulsbefehl von Operationsverstärkern (1, 2) gebildet werden, welche die gleichen Eigenschaften wie die Verstärker (3, 4) der Detektorschaltung für das Blockieren des Motors haben.

9. Vorrichtung nach einem der Ansprüche 1 bis 8, dadurch **gekennzeichnet,** daß die elektronische Schaltung (50) für die Impulssteuerung und das Detektieren des Blockierens im Inneren des Gehäuses (56) des Handschalters (38) untergebracht ist.

10. Vorrichtung nach Anspruch 9, dadurch **gekennzeichnet,** daß die Bauteile der elektronischen Schaltung (50) auf einer Seite einer Karte (60) einer gedruckten Schaltung vorgesehen sind, daß die festen Kontakte (58) der einzelnen Schalter (D, M, DA, MA) von der gegenüberliegenden Fläche der Karte (60) getragen werden, und daß diese Karte eine feste Trennwand im Inneren des Gehäuses (38) bildet.

11. Vorrichtung nach einem der Ansprüche 1 bis 9, dadurch **gekennzeichnet,** daß sie in den Motor (M) integriert ist.

12. Vorrichtung nach einem der Ansprüche 1 bis 9, dadurch **gekennzeichnet,** daß die Detektorschaltung, die Verzögerungsschaltung und die bistabile Steuerschaltung vollständig oder teilweise von einer spezifischen integrierten Schaltung oder teilweise von einem Mikroprozessor gebildet werden.

13. Verfahren zum Steuern eines elektrischen Motors, insbesondere eines Fensterhebers eines Fahrzeugs, bei dem die Versorgung des Motors beim Blockieren desselben und beim Auftreten eines Steuerstroms unterbrochen wird, dessen Stärke im wesentlichen gleich der detektierten Startgröße im Vergleich zu einer den Motorstrom wiedergebenden Signal und einem Bezugssignal ist, dadurch **gekennzeichnet,** daß die Größe des Startstroms des Motors für jeden Arbeitszyklus gespeichert und als Bezugsgröße genutzt wird.

14. Verfahren nach Anspruch 13, dadurch **gekennzeichnet,** daß die Erfassung und die Speicherung des Startwertes mittels einer schnellen Kondensatoraufladung ($C_1$, $R_{17}$) und einer langsamen Entladung ($R_{14}$, $D_3$) erfolgen, wobei die erfaßte Größe während eines gesamten Arbeitszyklus im wesentlichen konstant gehalten wird.

## FIG_1

## FIG_2

FIG_3

EP 0 267 064 B1

FIG.4

FIG.5

EP 0 267 064 B1

FIG. 6

FIG. 7